# EUROPEAN PATENT APPLICATION

(11) **EP 4 748 234 A1**
(43) Date of publication of application: **27.05.2026**
(21) Application number: 25217739.9
(22) Date of filing: 21.11.2025
(51) Int. Cl.: A23B 7/144, A23B 7/152

(54) **METHOD FOR THE PRESERVATION OF HORTICULTURAL PRODUCTS BY MEANS OF A CONTROLLED ATMOSPHERE**

(30) Priority: 22.11.2024 IT 202400026379
(71) Applicant: Societa' Italiana Acetilene & Derivati S.I.A.D. S.p.A. in breve S.I.A.D. S.p.A., 24126 Bergamo (IT)
(72) Inventor: BISSOLOTTI, Giorgio, 24126 BERGAMO (IT); PASINETTI, Eleonora, 24126 BERGAMO (IT); PERONI, Michela, 24126 BERGAMO (IT); GENINI, Giorgia, 24126 BERGAMO (IT); MATTIUZZI, Sara, 24126 BERGAMO (IT); ALETTI, Beatrice, 24126 BERGAMO (IT)
(74) Representative: Bianchetti & Minoja with Trevisan & Cuonzo IPS SRL

(57) **Abstract**

The present invention relates to a method for the preservation of post-harvest horticultural products based on the use of a controlled atmosphere with a composition that is kept constant by means of the automatic periodic replenishment with the same mixture.

## Description

The present invention relates to a method for the preservation of horticultural products, in particular small fruits and non-climacteric fruits, based on the use of a controlled atmosphere.

### Introduction

The preservation of horticultural products is gaining more and more interest due to the considerable increase in demand from the market.

The problem is particularly felt in the sector of small fruits and non-climacteric fruits, delicate products that spoil and perish very easily due to their susceptibility to mechanical damage, water loss and bacterial/fungal attack.

Because of their perishability and fragility, the small fruits are packed directly in containers for retail sale in the field or in packaging centres, sometimes without disinfection treatment. However, the microbiological load of fruits poses a risk to the health of consumers, as no process is envisaged for reducing or eliminating harmful or pathogenic microorganisms (V.H. Tournas, Eugenia Katsoudas, International Journal of Food Microbiology, 2005, Vos. 105, Issue 1, (5), 11-17).

Post-harvest deterioration is one of the main causes of the deterioration of small fruits; to overcome this problem, fungicides/pesticides or chlorine-based disinfectants are often applied, together with the maintenance of low processing and storage temperatures. However, the risk of pesticide-resistant pathogenic strains and environmental pollution caused by residues, coupled with consumer demands to minimize chemical use, have led to increased restrictions by marketing chains and regulatory agencies on agrochemical use, particularly for post-harvest applications.

To overcome these problems, technologies defined MAP (Modified Atmosphere Packaging) have been proposed that employ gases such as carbon dioxide, oxygen or noble gases (Fang, Y. and Wakisaka, M. A. Review on the Modified Atmosphere Preservation of Fruits and Vegetables with Cutting-Edge Technologies: Agriculture, 11, 992, 2021).

According to these techniques, carbon dioxide (between 30 and 70% by volume) and oxygen at low concentrations (less than 1% by volume) are conveyed separately to preservation cells where the gases are mixed and their maintenance over time is regulated by suitable absorption filters.

The low concentration of oxygen present in the preservation atmosphere limits oxidative phenomena and at the same time allows the continuation of biological processes useful for maintaining the appearance of the treated plants (Italian patent applications IT201900005688, ITSV20000035A1 and IT202100003299A1).

Treatments with noble gases have also been described (WO 93/19629) that offer advantages in the preservation of different vegetables; in fact, noble gases play an important role in both pre-packaging treatments and in terms of modified atmospheres in packaging.

The use of hydrogen in cryopreservation devices for the preservation of pre-packaged foods was described by Zeng J, Ye Z, Sun X. in Med Gas Res. 4-15, 2014, PLoS One. 2013 Aug 12;8(8): e71038 and in CN212767706U.

Since 2001, ozone has been recognized by the Food and Drug Administration (FDA) as a Generally Recognized As Safe (GRAS) compound for commercial use as a disinfectant and sanitizer in food handling.

Ozone as a sanitizer has the advantages of being able to be produced on site and does not need storage, it decomposes quickly into oxygen and does not have accumulation problems.

Several studies have investigated the use of ozone in the preservation of fruits and small fruits. Piechowiak T. et al. (Food and Bioprocess Technology (2020) 13:1240-1245) tested the effect of ozone on the level of oxidative stress markers in blueberry fruits during cold preservation (4°C). Blueberries of the *Vaccinum corymbosum L.* type were ozonated at a concentration of 15 ppmv for 30 minutes, every 12 hours for 28 days of preservation at 4°C. The results show that treatment with ozone activates a defence mechanism against oxidative stress, inducing, with respect to untreated samples, greater activity of antioxidant enzymes such as superoxide dismutase, glutathione peroxidase and phenylalanine ammonia-lyase during the first 21 days of preservation.

In pre-packaging treatments with ozone, significant results were also achieved in 30 minutes with the administration of 4000 ppmv of O₃ (Horvitz S. et al., Crit Rev Food Sci Nutr 2014;54(3):312-39).

WO2022107119 discloses the use of O₃ both in solution during the washing step, added to water (0.5 - 2 ppmv) and as a pre-packaging treatment added to the atmosphere of the conservation chamber at a concentration of 20 - 300 ppmv.

Italian patent IT202200006851 concerns a plant and a process for the preservation of horticultural products; the plant comprises refrigerated cells in which the atmosphere is controlled and in which ozone is introduced under the control of an O₃ concentration analysis and monitoring system.

US11350641 discloses MAPs consisting of 8% to 17% oxygen and 4% to 13% carbon dioxide and enriched with ozone.

GB 511,492 discloses a process of preserving plants in atmosphere under reduced pressure comprising 2.5-10% oxygen, 2.5-17% carbon dioxide and at least one compound selected from formaldehyde, phenol, hydrocyanic acid, sulphur dioxide, mercury salts and possibly ozone.

A growing number of studies and patents are interested in applications that exploit gases to treat fruits and vegetables so that the related food chain can be increasingly manageable in terms of product quality and process timing in every phase up to distribution. It should be noted that there are no application cases in the literature involving the combined use of hydrogen and ozone in the preservation of fruit.

### Description of the Invention

It has now been found that horticultural products in general, and in particular small fruits and non-climacteric fruits such as blueberries, raspberries, strawberries and the like can be advantageously preserved using a gas mixture of predefined composition and kept constant during storage, to which ozone is added at predetermined time intervals.

In particular, the invention relates to a method for the preservation of horticultural products, small fruits and non-climacteric fruits, in preservation cells, or containers, comprising:
- exposure of said products to a controlled atmosphere consisting of a gaseous mixture of 1-10% v/v oxygen, 5-30% v/v carbon dioxide, 0.1-4% v/v hydrogen and 10-80% v/v nitrogen or argon, wherein the composition of said atmosphere is maintained constant over time by means of automatic replenishment with said gaseous mixture;
- addition to said atmosphere of 100-1000 ppmv of ozone,
- repetition of the addition of ozone at predetermined times.

Preferably, the controlled atmosphere consists of 1-7% v/v oxygen. 15-20% v/v carbon dioxide, 1-3% v/v hydrogen and 70-75% v/v nitrogen. A particularly preferred mixture for the first stage of the method consists of 1-5% vol oxygen, 20% vol carbon dioxide, 0.1-2% vol hydrogen and up to 100% nitrogen or argon.

According to preferred aspects of the method of the invention, the controlled atmosphere is renewed with a frequency of 1-5 days, the cells are maintained at the temperature of 1-8°C at an overpressure of 3-5 mbar.

The automatic control of the controlled atmosphere occurs by means of the use of oxygen and/or carbon dioxide and/or hydrogen sensors, solenoid valves and a dedicated programmable logic controller (PLC) for the maintenance of the gas content within acceptability limits of ±0.5-2.5%.

The gaseous mixture preferably has a bacterial load of less than 25 CFU/m³, determined by means of microbiological controls.

The repetition of the ozone addition is preferably carried out every 15-60 days for 1-6 hours.

The added ozone is produced by means of a generator fed with pure oxygen capable of producing an ozone flow at a concentration of up to 7% by weight.

The addition of ozone may conveniently be carried out by dilution in the stream of preservation mixture.

The method of the invention allows to achieve much higher preservation times of the small fruits than those known to date. In particular, the method of the invention allows to overcome the limits of the known systems by prolonging the preservation times by 3-5 times. For example, it allows to store blueberries for periods longer than 6 months and raspberries for four weeks.

The selection of the components and concentrations that characterize the gas mixture allows to limit the ripening and fermentation phenomena, to favour the bacteriostatic action, to avoid acidification effects and to promote the antioxidant action.

The addition of ozone in the described manners favours sanitization (reduction/containment of the bacterial and fungal load), without affecting the organoleptic characteristics and integrity of the fruits and without altering the composition of the internal atmosphere of the preservation containers.

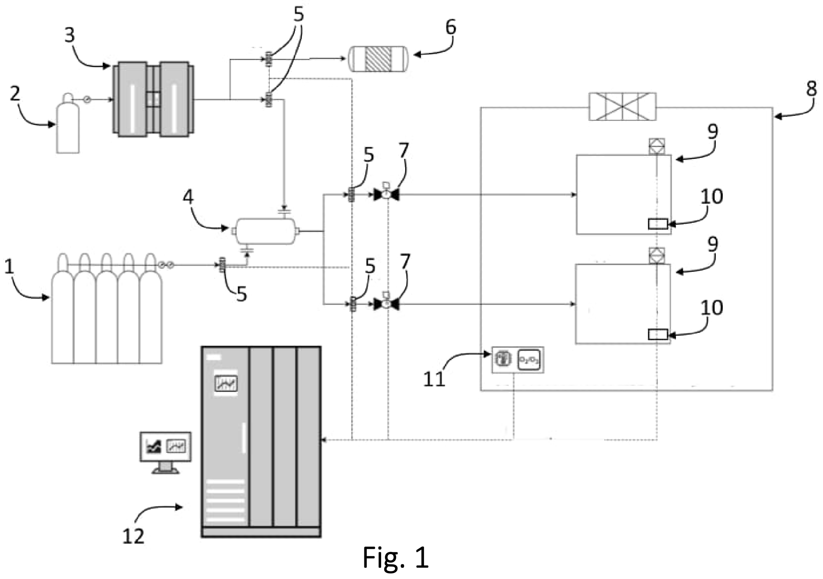

Figure 1 shows a diagram of a plant for implementing the method of the invention.

The horticultural products are placed, after harvesting, in preservation cells, or containers, (9) positioned in a cold room (8) maintained at 1-3°C. Once placed in the containers (9), the products, separated into boxes and in packages ready for sale, are kept, inside the containers (9) themselves, in a controlled atmosphere according to the composition indicated above.

The composition of the internal atmosphere of the containers (9) is kept constant by means of an automatic control system (10-12), based on the analysis of the concentrations of the gases constituting the atmosphere itself and the consequent replenishment of the desired conditions by means of the insufflation of a gaseous mixture (preservation mixture) consisting of O₂/CO₂/H₂/N₂ (and/or Ar) according to the same volumetric proportions of the controlled atmosphere, without the ozone content. The control system provides, regardless of the atmosphere analysis, for a complete replacement of the gaseous volume inside the containers once every 1-5 days, preferably every 2-5 days.

Preferably, the automatic control system comprises at least a first group of sensors (10) associated with the containers (9) configured to detect one or more of the following parameters inside the container (9): temperature, humidity, percentage of O₂, percentage of CO₂, percentage of H₂ and/or temperature of the product inside the container (9).

Preferably, the automatic control system comprises at least a second group of environmental and safety sensors (11) configured to detect one or more of the following environmental parameters: ambient temperature, ambient humidity, percentage of ambient O₂, percentage of ambient O₃.

Preferably, the automatic control system further comprises a control unit (12) comprising a control panel and a PLC, where such a control unit (12) is in data communication with at least the first group of sensors (11) and/or with the second group of sensors (10).

The preservation mixture is supplied in cylinders/cylinder assemblies/cylinder packs (1) of compressed gas (150-200 bar). The cylinders are equipped with a special pressure reducer, flow regulator and automatic system for opening/closing the flow of the gaseous mixture, adjusted by PLC (12). The feed pressure of the mixture is adjusted to values in the order of 0.1-0.5 bar. As a function of the consent of the automatic control system, the gas flow is conveyed into the preservation containers (9) according to flow rates suitable for the volume of the containers themselves. The latter are kept at a slight overpressure with respect to the ambient pressure (3-5 mbar).

The addition of ozone to the preservation atmosphere is carried out periodically, providing for the dilution of a concentrated flow of ozone (up to 7% by weight) in the flow of the preservation mixture, by means of a special diluent (4). The ozone is produced in situ by an ozone generator (3) fed with pure oxygen (2), e.g., in a cylinder.

The ozone injection is carried out with a frequency of 15-60 days for a duration of 1-6 hours/injection. During the ozone injection the composition of the internal atmosphere of the containers (9) remains unchanged, unless an absolute increase in the oxygen content does not exceed 2% by volume. Any excess of the concentrated ozone flow is by-passed and conveyed into a catalytic or thermo-catalytic destroyer (6), which allows the ozone to be destroyed into oxygen, and then released into the external atmosphere.

Preferably, the automatic control system comprises at least a first group of sensors (10) associated with the containers (9) configured to detect one or more of the following parameters inside the container (9): temperature, humidity, percentage of O₂, percentage of CO₂, percentage of H₂ and/or temperature of the product inside the container (9).

Preferably, the automatic control system comprises at least a second group of environmental and safety sensors (11) configured to detect one or more of the following environmental parameters: ambient temperature, ambient humidity, percentage of ambient O₂, percentage of ambient O₃.

Preferably, the automatic control system further comprises a control unit (12) comprising a control panel and a PLC, where such a control unit (12) is in data communication with at least the first group of sensors (11) and/or with the second group of sensors (10).

Preferably, the automatic control system comprises a plurality of flow meters (5) and solenoid valves (7) in data communication with the control unit (12) and configured, respectively, to control the flow of the gases and to manage the automatic opening and closing of the gas flows to the containers (9) on the basis of command signals received from the control unit (12).

Preferably, the introduction of the gases into each of the containers (9) is adjusted by means of a respective flow meter (5) and a respective solenoid valve (7), in data communication with the central unit (12).

Preferably, further flow meters (5) are arranged between the cylinders (1) and the diluter (4), between the ozone generator (3) and the diluter (4), and between the ozone generator (3) and the ozone destroyer (6).

The invention is now illustrated in more detail in the following examples.

### Example 1

Tests were carried out in cold rooms (8) in sealed containment boxes (9), equipped with loading/unloading points of the gaseous mixtures, on a total quantity of blueberries of about 40 kg, treated as follows:
∘ Washing with ozonated water;
∘ Flushing with gaseous ozone (150-400 ppmv) of the blueberries stored in the preservation boxes before the start of preservation in a controlled atmosphere consisting of: 1-5% oxygen, 20% carbon dioxide, 0.1-2% hydrogen, the rest nitrogen or argon (percentages by volume);
∘ Flushing with gaseous ozone (150-400 ppmv) in a controlled atmosphere and repeated once a month with a contact time of one hour.

The treatment made it possible to achieve preservation times of the order of 3-4 months, with respect to the 2 months achievable with refrigeration alone. The combination of the treatment in a controlled atmosphere with the addition of ozone repeated over time allowed to prolong the preservation for a further 3 months, for a total of 6 months overall, a result considerably higher than what has been achieved so far with the known art.

The tests were repeated on a quantity of about 400 kg of blueberries.

The use of the mixtures was combined with the treatment with gaseous ozone (once a month) providing for the dilution thereof in the flow of the preservation mixture, avoiding the alteration of the composition of the atmosphere of the containers unless the oxygen content increased by 1-3%. The ozone was produced by an ozone generator fed with pure oxygen.

The results confirmed the possibility of preserving blueberries for long periods, for example from June to December without showing alterations thereof in the organoleptic characteristics, confirming the results obtained on a smaller scale with a prolongation of preservation times of at least 4 months with respect to refrigeration alone. The fruit preservation time following extraction from the preservation system remained high, from 5-7 days up to 14 days.

Similar results were also obtained on raspberries, fruits with a very reduced post-harvest duration (a few days), with prolongation of preservation up to at least 1 month, compared to times of about 5-7 days obtainable with refrigeration alone. Also for this fruit, the current preservation time has been increased by 3-4 times with respect to what can be obtained with the known art.

The preservation of blueberries and raspberries by means of the use of gaseous mixtures combined with ozone treatment, according to the method of the invention, as well as allowing the maintenance of organoleptic characteristics for up to 5-6 months for blueberries and up to 1 month for raspberries and not causing variations in their content of sugars, acids and vitamins, allowed to limit/reduce the microbial load (CBT and mould).

### Example 2

Similar to example 1, other tests were carried out that confirmed the good preservation of blueberries for over 4 months and raspberries for 1-1.5 months by means of the preservation system that is the subject of the present invention.

The results are extremely beneficial when considering that with refrigeration alone in an unchanged atmosphere, blueberries can be stored for only 30 days and raspberries for no more than 7-8 days.

To support the organoleptic findings in terms of the integrity of the fruits to taste and sight, studies were carried out on bacterial/fungal proliferation and weight variation.

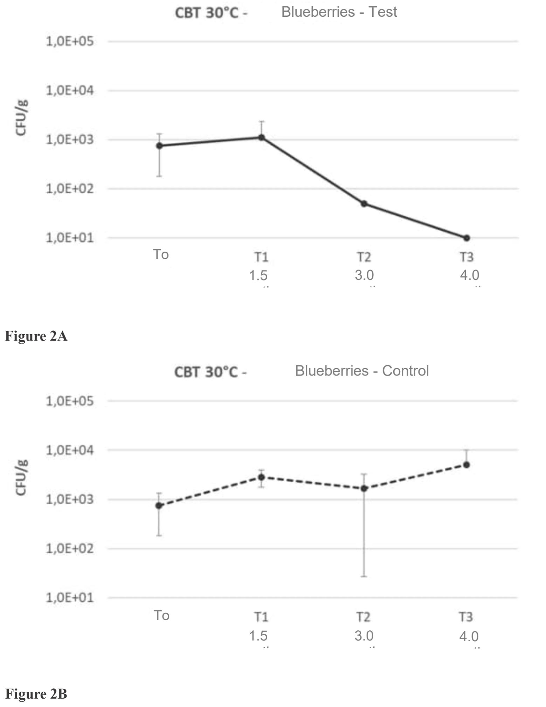

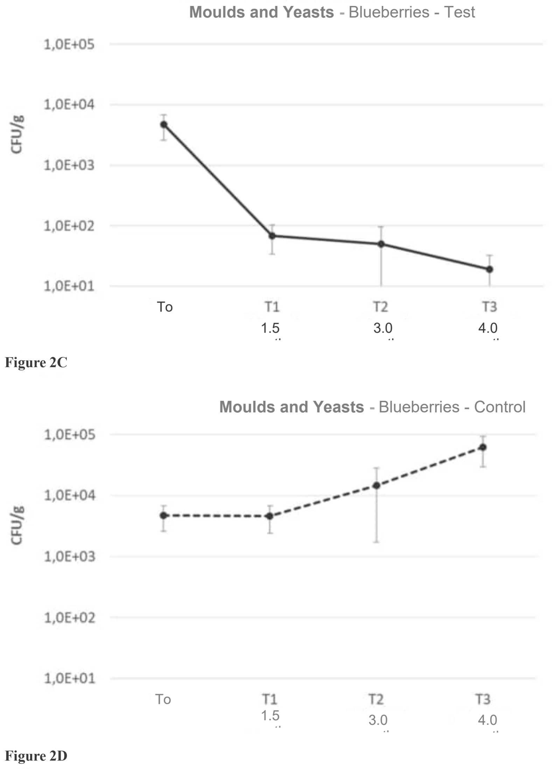

The microbiological analyses carried out highlighted how the preservation of small fruits according to the system which is the subject of the present invention prevents and limits the proliferation of bacterial and fungal microflora, which causes the deterioration of the fruits themselves. Figures 2a-2d show the trend of bacterial and fungal counts during a 4-month preservation period on blueberries. In the graphs, the curves named *Test* refer to the fruits preserved with the system of the invention and the *Control* curves refer to the fruits preserved with refrigeration alone. During the preservation, in the bacterial counts of the *Tests* there was a reduction of about two orders of magnitude with respect to the initial value and the containment of growth with respect to the *Control* of almost 3 orders of magnitude. The effects are even more evident in the case of fungal counts (moulds and yeasts), for which the *Tests* show the reduction of 1-2 orders of magnitude with respect to the initial value, with a containment of proliferation over time of more than 3 orders of magnitude with respect to the *Control.*

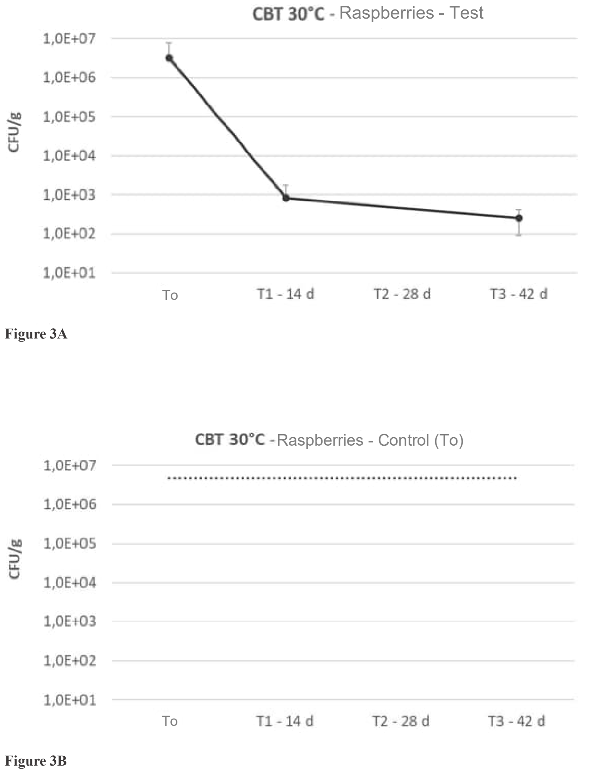

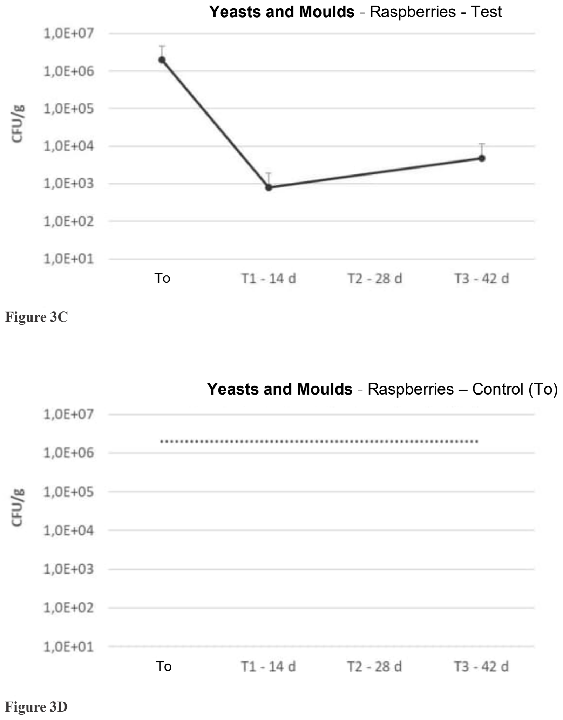

The results obtained in the tests on blueberries are also confirmed in tests carried out on raspberries with preservation times of up to 1.5 months. As seen in Figures 3a-3d, the bacterial and fungal counts of raspberries preserved by means of the system of the invention show the abatement of 3 orders of magnitude of the bacterial and fungal microflora and the substantial absence of proliferation over time.

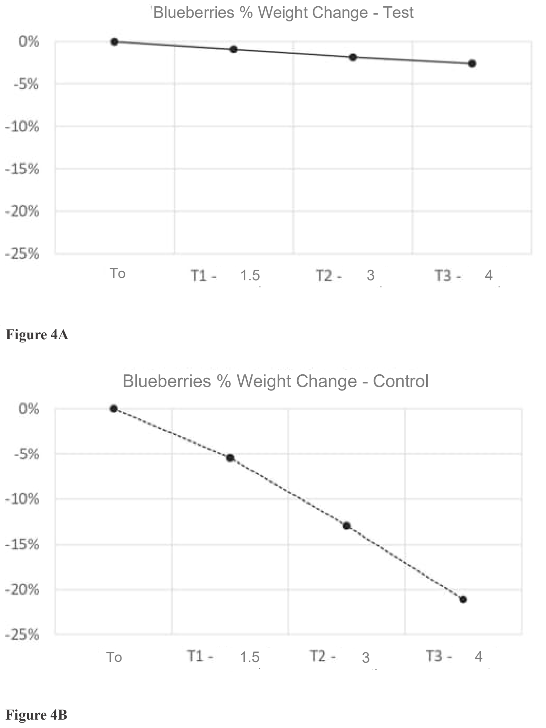

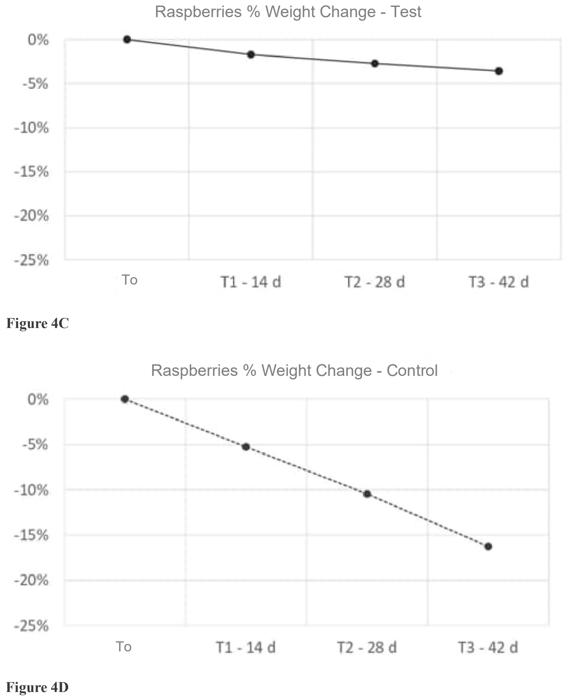

In addition to the reduction and containment of microbiological counts, the preservation system of the invention allows the maintenance of the integrity of the fruits without experiencing a significant weight loss, related to the onset of rotting phenomena and therefore fluid loss. Figures 4a-4d show the trend of the weight change recorded during the tests carried out on two varieties of blueberries and raspberries. It should be noted that in all the *Test* curves, the percentage weight loss of fruit was of the order of 1-4% during preservation, while for the Control curves it reached values of 16-18%.

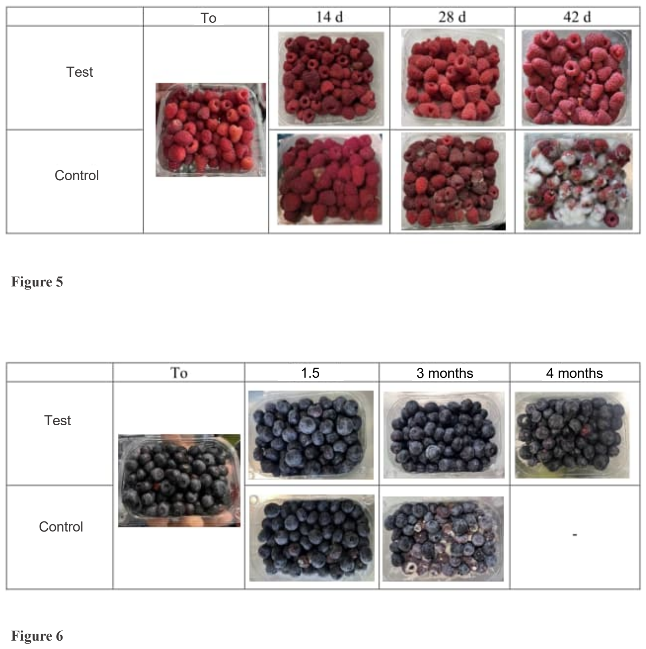

The microbiological and gravimetric results are consistent with the evidence of the integrity of the taste and appearance of the small fruits preserved by means of the system of the invention. Figures 5 and 6 show the appearance of raspberries and blueberries during the preservation tests using the system of the invention (*Test*) and refrigeration only (*Control*). There is a significant proliferation of mould on the fruits of the Control tests, from 14 days for raspberries and from 3 months for blueberries.

The data reported confirm that the preservation system of the invention allows to increase the preservation time of the small fruits tested by at least two times with respect to refrigeration alone.

## Claims

1. Method for the preservation of horticultural products in preservation cells kept at a temperature of 1-8°C, comprising:
- exposure of said products to a controlled atmosphere consisting of a mixture of 1-10% v/v oxygen, 5-30% v/v carbon dioxide, 0.1-4% v/v hydrogen and 10-80% v/v nitrogen or argon, wherein the composition of said atmosphere is maintained constant over time by means of automatic replenishment of said mixture;
- addition to said atmosphere of 100-1000 ppmv of ozone,
- repetition of the addition of ozone at predetermined times.

2. Method according to claim 1, wherein the controlled atmosphere consists of 3-7% v/v oxygen, 15-20% v/v carbon dioxide, 1-3% v/v hydrogen and 70-75% v/v nitrogen.

3. Method according to claim 1 or 2, wherein the controlled atmosphere is renewed at a frequency of 1-5 days.

4. Method according to one or more of the preceding claims, wherein the cells are maintained at an overpressure of 3-5 mbar.

5. Method according to one or more of the preceding claims, wherein the automatic control of the controlled atmosphere takes place by means of the use of oxygen and/or carbon dioxide and/or hydrogen sensors, solenoid valves and dedicated PLC for the maintenance of the gas content within the acceptability limits of +0.5-2.5%.

6. Method according to one or more of the preceding claims, wherein the repetition of the ozone addition is carried out every 15-60 days for 1-6 hours.

7. Method according to one or more of the preceding claims, wherein the addition of ozone takes place by dilution in the preservation mixture stream.

8. Method according to one or more of the preceding claims, wherein the addition of ozone results in an absolute increase of no more than 2% in the oxygen content of the controlled atmosphere.

9. Method according to one or more of the preceding claims, wherein the gaseous mixture has a bacterial load of less than 25 CFU/m³.

10. Method according to one or more of the preceding claims, wherein the horticultural products are small fruits and non-climacteric fruits, in particular blueberries and raspberries.
